# EUROPEAN PATENT APPLICATION

(11) **EP 1 480 456 A1**
(43) Date of publication of application: **24.11.2004**
(21) Application number: 04018856.7
(22) Date of filing: 01.09.1999
(51) Int. Cl.: H04N 5/913

(54) **Method and apparatus to reduce the effects of video copy protection signals**

(30) Priority: 02.09.1998 US 98804 P
(62) Divisional of application: 99944032.4
(71) Applicant: Macrovision Corporation, Santa Clara, CA 95050 (US)
(72) Inventor: Quan, Ronald, Cupertino, CA 95014 (US); Brill, Gerow D., New Freedom, PA 17349 (US)
(74) Representative: Needle, Jacqueline

(57) **Abstract**

A method and apparatus for reducing the effects of copy protection in a video signal is disclosed. The technique generally utilizes a particular pulse position shifting of AGC, normal sync and/or pseudo sync pulses to increase the separation between the pulses. Various embodiments are disclosed to provide the selective position separation between the sync/pseudo sync and AGC pulses. The gap is produced by position separation only of the trailing edge of the sync or pseudo sync pulses and the leading edge of the respective AGC pulses and not by narrowing any of the pulses. Where the gap is of sufficient duration, say of 0.5 µseconds to 2.0 µseconds, the AGC of a video recorder does not respond to the pseudo sync and AGC pulses of the copy protection signal.

## Description

The present invention relates to a method and apparatus for reducing the effects of copy protection signals in one or more selected video lines of a video signal.

The movie industry is very concerned about the unauthorized copying of movies and programs. US-A-4,631,603 discloses the protection of a video signal such that the copy protected video is viewable on a TV set but a recording produced therefrom lacks entertainment value. Thus, the recorded video programs suffer from artifacts ranging from low contrast to synchronizing problems. This US patent describes a method causing misoperation of the AGC system in a video cassette recorder while not causing a black depression problem in a television receiver displaying the copy protected signal.

Polish patent application PL 304477 discloses a variation of this earlier method.

US patents 4,965,901, 4,336,554, 5,157,510, 5,194,965, 5,583,936, 5,748,733 and 5,661,801 all describe methods of attenuating, blanking, narrowing, level shifting, modifying and/or clipping the copy protection pulses to defeat the copy protection process.

US-A-5,157,510 describes a method and apparatus for disabling the effect of copy-protect signals by narrowing the pulses whereby the frequency content of the pseudo sync pulses and/or the AGC pulses is increased.

The present invention seeks to provide a method of defeating the effects of copy protection signals.

According to a first aspect of the present invention there is provided a method of reducing the effects of copy protection signals in one or more selected video lines of a video signal, wherein the copy protection signals include sync or pseudo sync pulses, together with respective AGC pulses, with the sync or pseudo sync pulses having a given small position separation, which can be zero separation, from the respective AGC pulses, comprising:
providing the sync or pseudo sync pulses with the trailing edge thereof having the small position separation from the leading edge of respective AGC pulses, wherein the small position separation maintains the copy protection effect; and
shifting the position of the sync or pseudo sync pulses and/or shifting the position of the respective AGC pulses with respect to each other to provide position separation between the trailing edge of the sync or pseudo sync pulses and the leading edge of the respective AGC pulses, and thereby produce a gap of sufficient duration to defeat or reduce the effects of the copy protection signals in a video recorder or TV set and allow the recording of a viewable copy.

In embodiments of a method of the invention, a sufficiently wide time gap is inserted between the sync or pseudo sync pulses and the respective AGC pulses that a video recorder will respond to or sense the sync or pseudo sync pulses but still will allow for a recordable copy.

It will be appreciated that a videocassette system has a limited luminance frequency response, less than 2 MHz. A copy protection signal as described in US-A-4,631,603 recorded on a videocassette duplicating recorder with AGC turned off (to avoid the effects of copy protection) will produce a video signal with pulse shapes modified by the limited frequency response of the duplicating recorder. Since there is no gap between the pseudo sync pulses and the AGC pulses, the AGC system of a home duplicating recorder will respond to the combination of the pseudo sync pulses and the AGC pulses.

The limited bandwidth of the recording VCR responds slightly differently to the combination of pseudo-sync and AGC pulses separated by a time gap of 0.5 µseconds to 2.0 µseconds. If the time gap is as low as 0.5 µseconds, the limited bandwidth of the recording videocassette recorder distorts the time gap to effectively remove it and the effectiveness of the copy protection is essentially the same. As the gap widens, the effectiveness of the copy protection is reduced or removed.

Preferably, said gap is produced by position separation only of the trailing edge of the sync or pseudo sync pulses and the leading edge of the respective AGC pulses and not by narrowing any of the pulses.

Copy protection defeating methods of this invention may also be used in combination with any of the defeat techniques described in the art identified above.

In an embodiment of the invention, to defeat the copy protection process, the AGC pulse may be shifted (delayed) by about 1.5 µseconds from the preceding pseudo sync pulse and then the trailing edge of the preceding pseudo sync pulse may be trimmed by 0.6 µseconds. Thus a gap of about 2.1 µseconds exists between the trailing edge of the trimmed pseudo sync pulse and the leading edge of the delayed AGC pulse. If this gap is, for example, near blanking level for 2.1 µseconds, then the VCR will sample the voltage in the gap instead of the added AGC pulses for its AGC amplifier. By sampling this gap voltage near blanking level, the copy protection signal is then nullified. Alternatively, the gap voltage level may be set above or below blanking level.

In an embodiment, the leading edge of the AGC pulse is delayed relative to the trailing edge of the respective sync or pseudo sync pulses by a time period commensurate with the duration of the gap. For example, the delay is about 1.0 to 2.5 microseconds depending upon the amount of the small position separation, and provides a gap of about 1.5 or more microseconds.

In a preferred embodiment, the method comprises delaying the AGC pulses by about 0.5 to about 1.5 microseconds relative to respective sync or pseudo sync pulses whilst advancing the trailing edge of the sync or pseudo sync pulses about 0.5 to about 1.5 microseconds relative to the respective AGC pulses, to obtain said gap.

It is important to note that by simply delaying or shifting the position of the leading edge of the AGC pulse relative to the trailing edge of the respective pseudo sync pulse, the gap between the pseudo sync pulses and the AGC pulses will nullify or partially nullify the effects of the AGC copy protection signal. It is also possible to create this gap in other ways such as moving the trailing edge of pseudo sync pulse away from the leading edge of the upcoming AGC pulse, or some combination of moving the position of both the AGC pulse and pseudo sync pulse to form a gap that would defeat the copy protection process. Typical gap durations of 1.5 µseconds or more have proved effective in defeating the copy protection signal. The defeat of the copy protection signals by the provision of a gap according to embodiments of the invention can be enhanced by additionally narrowing the pseudo sync pulses and/or AGC pulses as described in US-A-5,157,510.

It should be noted that a defeat method of the invention may be varied and then used as a copy protection signal.

The present invention also extends to apparatus for reducing the effects of copy protection signals in one or more selected video lines of a video signal, wherein the copy protection signals include sync or pseudo sync pulses, together with respective AGC pulses, with the sync or pseudo sync pulses having a given small position separation, which can be zero separation, from the respective AGC pulses, the apparatus comprising:
input means for supplying the copy protected video signal with the sync or pseudo sync pulses and the respective AGC pulses with the given small position separation which maintains the copy protection effect;
timing circuitry for providing timing signals which are coincident with the copy protection signals and indicative of one or more video lines containing sync or pseudo sync pulses together with respective AGC pulses; and
circuit means responsive to the timing circuitry for shifting positions of the sync or pseudo sync pulses relative to positions of the respective AGC pulses so as to provide position separation between the trailing edges of the sync or pseudo sync pulses and the leading edges of respective AGC pulses and so provide a gap of sufficient duration to reduce or defeat the effects of the copy protection signals in a video recorder or TV set and to allow the recording of a viewable copy of the video signal.

In a preferred embodiment, said circuit means produces said gap only by position separation of the trailing edge of the sync or pseudo sync pulses and the leading edge of the respective AGC pulses and not by narrowing any of the pulses.

Embodiments of the present invention will hereinafter be described, by way of example, with reference to the accompanying drawings, in which:
Figure 1 a illustrates a basic anticopy process consisting of AGC and pseudo sync pulses;
Figure 1b illustrates a modification to the basic anticopy process consisting of AGC and pseudo sync pulses;
Figure 2 illustrates various ways to position shift the AGC pulse to defeat the copy protection signal, and also shows dynamically shifting the position of the AGC pulse;
Figure 3 illustrates a combination of position shifting and narrowing (trimming) of AGC pulses to defeat the copy protection signal;
Figure 4 illustrates various ways to shift the relative position between AGC pulses and pseudo sync pulses whilst narrowing pseudo sync and/or AGC pulses to defeat the copy protection signal;
Figure 5 illustrates a block diagram of an apparatus for defeating a copy protection signal by delaying the AGC pulses;
Figures 5a to 5e illustrate the waveforms generated at various points in a circuit of Figure 5;
Figure 6 illustrates an apparatus for defeating a copy protection process by inserting a time gap between the pseudo sync pulses and the AGC pulses;
Figure 6a to 6e illustrate several waveforms related or generated by the circuit of Figure 6 given typical copy protection signals as an input;
Figure 7 illustrates an embodiment of copy protection apparatus arranged to generate a dynamically variable time gap between the trailing edge of pseudo sync pulses and the leading edge of AGC pulses;
Figures 7a to 7e illustrate the relevant waveforms that are generated at various points in the circuit of Figure 7;
Figures 8a and 8b illustrate position delay or modulation of raised back porches to be used as a defeat process or as a copy protection signal;
Figure 9a illustrates a prior art copy protection signal, Figure 9b illustrates a defeating or modifying method in which at least portions of the pseudo sync and/or AGC pulses are reversed, and Figure 9c illustrates another method for defeating or modifying the original process by phase shifting portions of the pseudo syncs and/or AGC pulses;
Figure 10 is a block diagram illustrating a circuit for reversing at least portions of the pseudo sync and/or AGC pulses by way of a memory circuit; and
Figure 11 is a block diagram illustrating a circuit for inverting or phase shifting portions of the pseudo syncs and/or AGC pulses by way of an inverting or phase shifting amplifier.

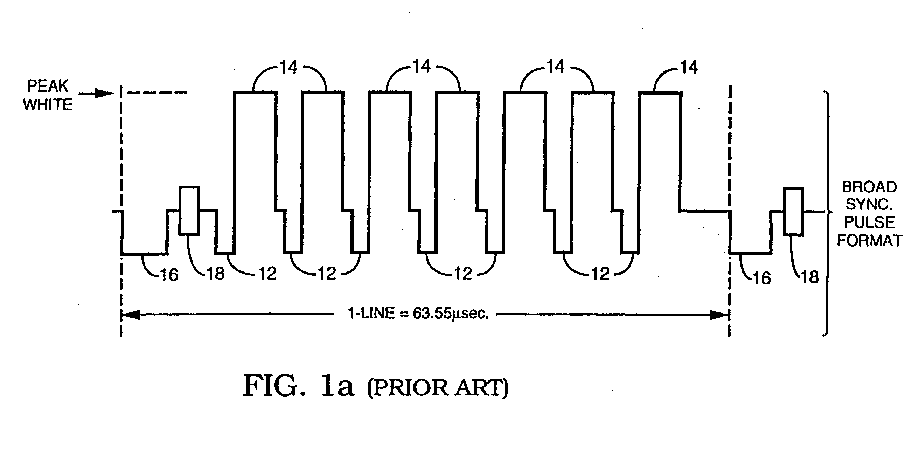

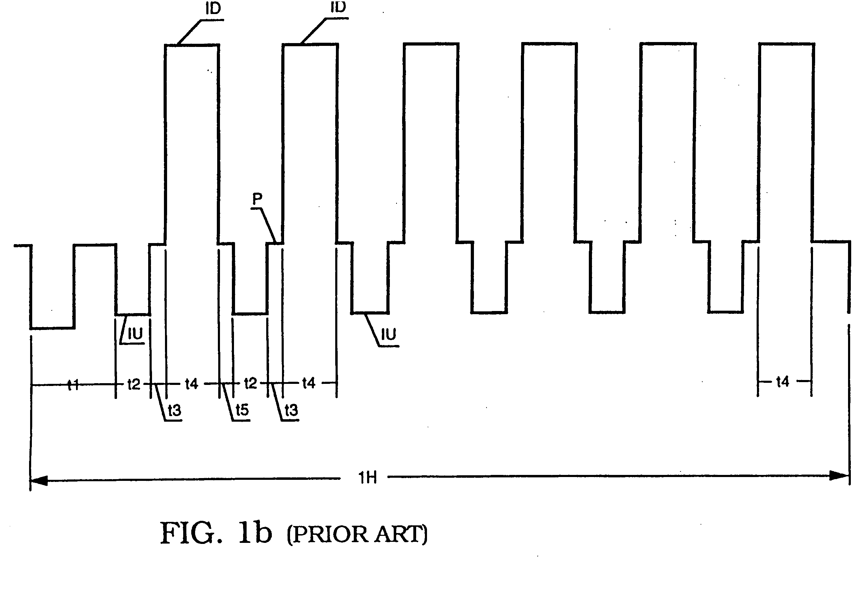

Figures 1a and 1b illustrate prior art copy protection signals as shown in US-A-4,631,602 and PL 304477 respectively.

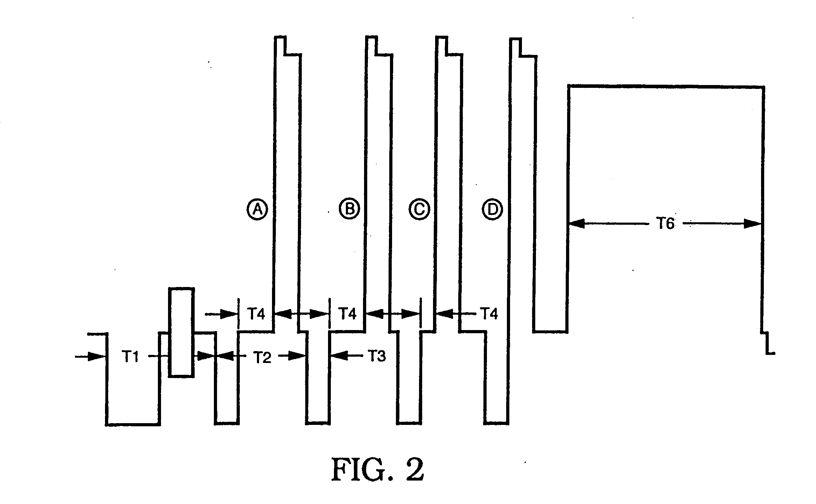

Figure 2 illustrates various waveforms showing how AGC pulses can be delayed to provide copy protection defeating techniques of the invention. First, the waveform D in Figure 2 illustrates the AGC pulse and pseudo sync pulse at the normal position previously shown in Figure 1 a which causes copy protection. Waveforms A to C show various delays or gaps between the trailing edge of pseudo sync pulse and the leading edge of the respective AGC pulse. Waveforms A and B are effective in turning off the copy protection signal while waveform C causes partial reduction or turn off of the copy protection signal. For effective defeat of the copy protection signal it follows that waveforms A and B are preferable.

For a new copy protection signal that is dynamically varied from on to off, one technique of the invention starts, for example, with several seconds of the waveform D of Figure 2 (copy protection on) then transitions to the waveform C of Figure 2 (copy protection partially on) and then transitions to the waveform B of the Figure 2 (copy protection turned off). The gap, or separation T4, in Figure 2 is preferably continuously or discretely changing from zero to greater than about 1.5 µseconds. Waveform A is used to turn copy protection off.

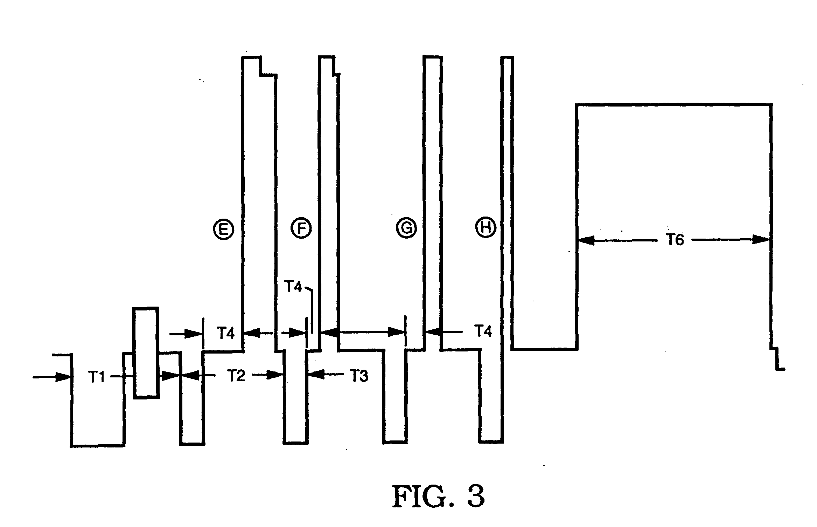

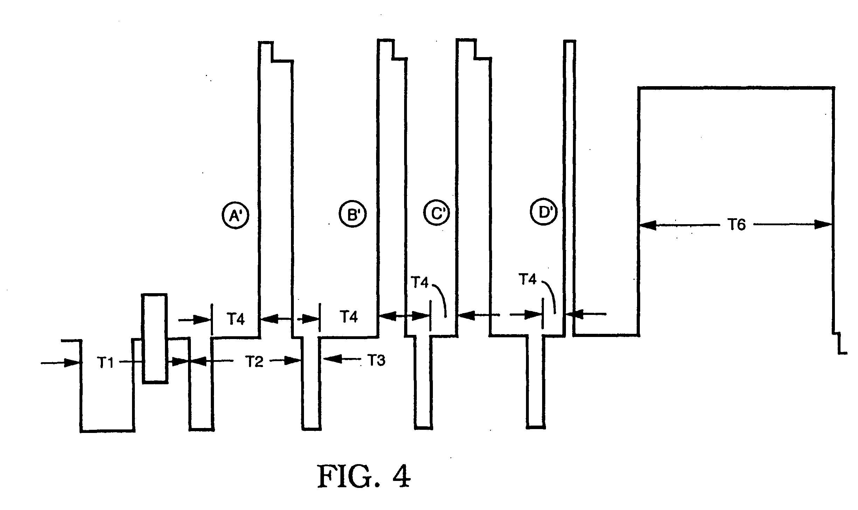

In Figure 2 (as well as Figures 3, 4) the time interval T1 defines the normal sync to the first pseudo sync pulse period, T2 defines the repetition rate of added pseudo sync pulses, T3 defines the pseudo sync pulses' width and T4 defines the gap duration. T6 designates the width of a white reference pulse which may be included as an option.

Figure 3 illustrates a variation of the embodiment of Figure 2 with AGC pulse narrowing, although the pseudo sync pulses can be narrowed as well. In the waveform H of Figure 3, the pulse resembles a narrowed AGC pulse as in US patents 5,157,510 and 5,194,965. While waveform H of Figure 3 can be used for defeating copy protection signals, it can again also be used as part of a copy protection signal. The waveform D of Figure 2 represents a normal copy protection signal which can transition to the waveform H of Figure 3, a signal with a narrowed AGC pulse, and then transition to waveform F of Figure 3, a signal with a gap and narrowed AGC pulse. Finally the copy protection signal can be turned off by a transition to the waveform G of Figure 3, where the gap is larger with a narrowed AGC pulse. Waveform E of Figure 3 is equivalent to waveform A of Figure 2 and is used to defeat copy protection.

Figure 4 illustrates pseudo sync pulse narrowing combined with position delay or modulation of varying pulse widths of the AGC pulses to defeat the copy protection process, or form a dynamic copy protection signal.

The waveform D' of Figure 4 illustrates a defeat process not illustrated in the patents '510 and '965 referred to above. In waveform D' of Figure 4, the pseudo sync pulse's trailing edge is advanced to provide a narrowed pseudo sync pulse followed by a delayed AGC pulse leading edge to provide a narrowed AGC pulse. The waveform C' of Figure 4 illustrates a further gap increase in duration between the AGC pulse by position delaying the AGC pulse using an advanced trailing edge to narrow the pseudo sync pulse. The waveform B' of Figure 4 illustrates a combination of position separation between the AGC pulse and the pseudo sync pulse with narrowed AGC and pseudo sync pulses. Thus, the waveform B' can be used as a method to defeat the copy protection pulses. As may be seen, waveform A' is generally the equivalent of waveforms A and E of Figures 2 and 3, respectively, and also may be used to defeat the effects of copy protection signals.

Alternatively, by employing narrowed pseudo sync pulses and/or AGC pulses that are varied in width, Figure 4 provides a dynamic copy protection signal based on dynamically changing the gap (separation) and the amount of narrowing on pseudo sync pulses and/or AGC pulses. For example, the embodiment may start with a waveform D as illustrated in Figure 2 to provide the copy protection process, then provide narrowing of the AGC pulses and/or pseudo sync pulses to achieve partial copy protection via the waveform C' in Figure 4, and then transition to a signal such as waveform B' in Figure 4 to turn off the copy protection. The embodiment then reverses the cycle from waveforms B', to C' and back to D to restore the copy protection.

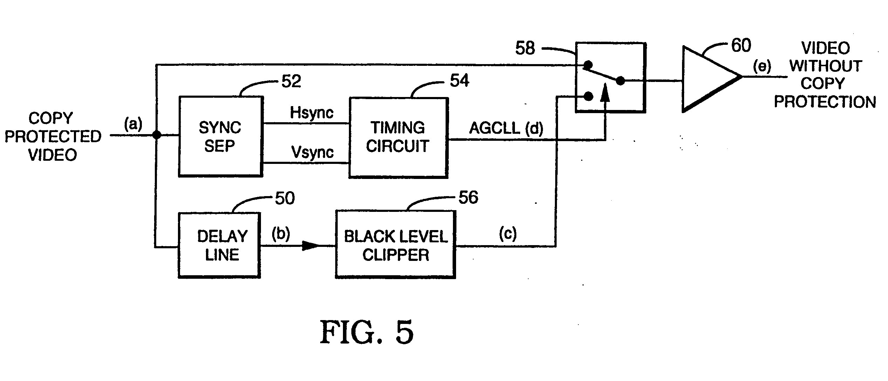

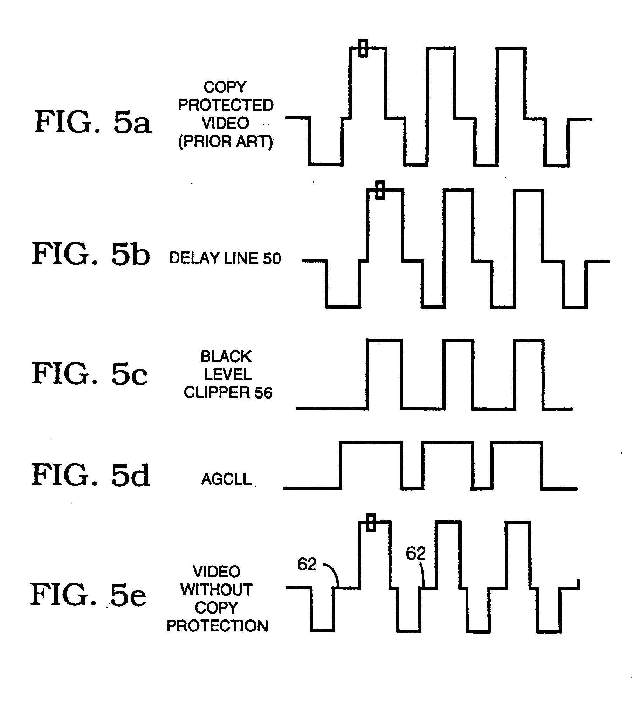

Figure 5 is a block diagram depicting an example of circuitry for defeating the copy protection pulses by delaying the AGC pulses relative to the pseudo sync pulses. To this end, copy protected video is inputted as at (a) to a delay line circuit 50, which delays the input video, and also to a sync separator circuit 52. The output of the sync separator circuit provides horizontal and vertical sync pulses to a timing circuit 54 which in turn outputs pulses at (d) coincident with the video lines containing raised back porch AGC pulses and those with AGC pulses. This output signal, AGCLL, is logic high at least from the leading edge of the AGC pulses of the input video signal to the trailing edge of the AGC pulses which appear at an output (b) of the delay line circuit 50 (delayed input video of about 1.5 µseconds or more). A black clipper circuit 56 coupled to the delay line 50 clips off most or all of the sync pulses. Thus, delayed AGC pulses are supplied at the output (c) of the black clipper circuit. By using an electronic switch 58, with control signal AGCLL to switch in the delayed AGC pulses, the copy protection pulses' effects are then defeated or reduced at the output (e) of an amplifier 60.

Figures 5a through 5e illustrate the waveforms generated at different locations of Figure 5 and is generally self-explanatory. For example, in Figure 5e, the output has a gap, that is, separation 62, corresponding to gap T4 of Figures 2-4, long enough between the sync pulses and AGC pulses to allow recordable copies of the video signal. It should be noted that Figure 5 is just an illustration of an apparatus for producing position delay of AGC pulses to defeat the copy protection signal. It is also possible to design a position delay equivalently by removing substantially the original copy protection signal or parts of it and then regenerating modified pseudo sync pulses and/or AGC pulses. For instance, the incoming copy protection pulses may be removed and then the pseudo sync pulses inserted in advance of the original pseudo sync pulse, with AGC pulses inserted in delayed relation to the original AGC pulses. Thus a gap voltage is produced between the pseudo sync pulses and AGC pulses that allows for a recordable copy.

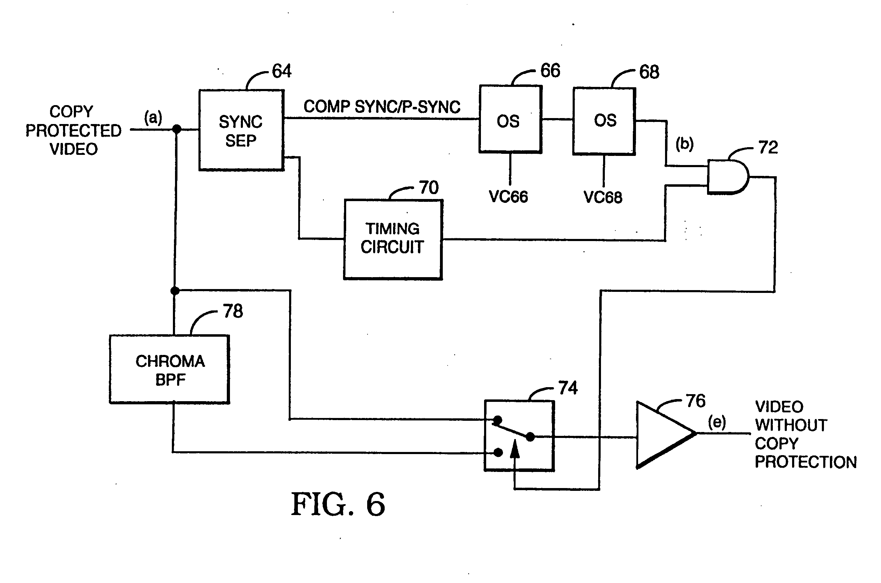

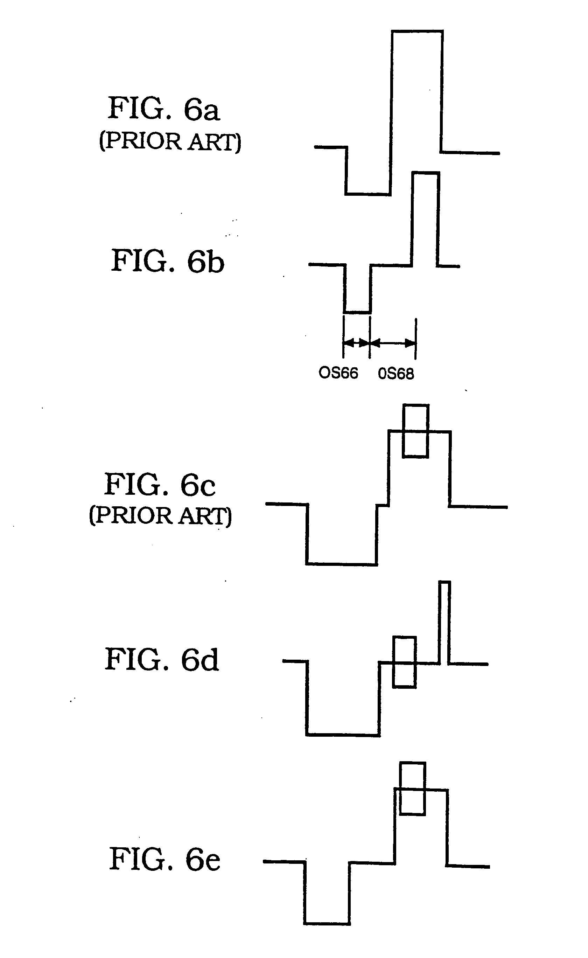

Figure 6 is a block diagram depicting circuitry for creating a time gap around blanking level by advancing the trailing edge of sync and delaying the leading edge of the AGC pulse of the copy protection signal, leading to a recordable copy. Copy protected video is fed at (a) to a sync separator 64 to output composite sync including pseudo sync pulses to a one shot (multivibrator) 66. One shot 66 triggers off the leading edge of sync pulses including pseudo sync pulses, and its pulse width can be controlled via a control voltage VC66. The output (b) of one shot 66 is coupled to another one shot 68 whose pulse width is controlled by another control voltage, VC68. The output (b) of one shot 68 is then a pulse coincident with the latter portion of the sync or pseudo sync pulse and the beginning portion of the AGC pulse of the copy protected input video signal. A sync separator output also is fed to a timing circuit 70 which generates pulses coincident with the copy protection signal within the video lines. The output of the timing circuit 70 and of the one shot 68 are fed to an AND gate 72 to control a switch 74 during the times copy protection pulses are present. The switch 74 receives the copy protected video at (a) and supplies a signal containing a gap voltage between the sync and AGC pulses of copy protection signals, whereby the video signal at an output (e) of an output amplifier 76 allows for a recordable copy. Figure 6 also uses a chroma bandpass filter 78 to generate the gap, but also to reinsert color burst during narrowing of the normal sync and/or raised back porch. As a matter of fact narrowing and/or attenuation and/or level shifting of any kind on the raised back porch AGC pulses and/or its sync signal can result in a recordable copy.

Figures 6a to 6e show the result of this kind of narrowing. Figure 6a represents a typical copy protection signal consisting of pseudo sync pulses and AGC pulses. Figure 6b shows the narrowed pseudo sync pulses and/or AGC pulses with a gap (voltage) in between). Figure 6c shows a horizontal pulse with a raised back porch AGC pulse in typical fashion of a copy protection signal. Figures 6d and 6e show the result of the apparatus for Figure 6 which narrows the raised back porch AGC pulse (Figure 6d) and/or the horizontal sync pulse (Figure 6e) to allow a recordable copy. Note in Figure 6e the color burst is still present even after narrowing, in the area where burst is normally located.

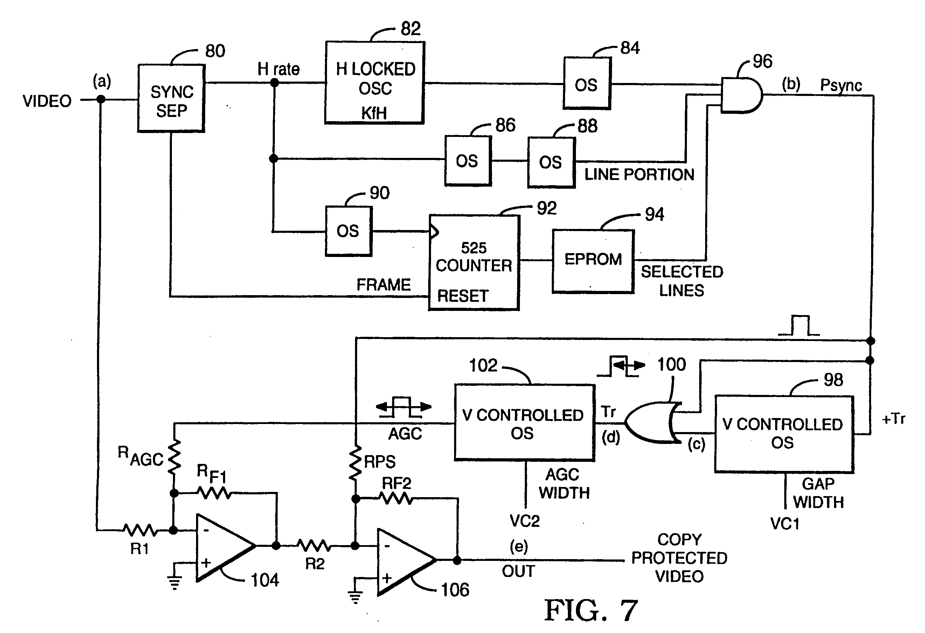

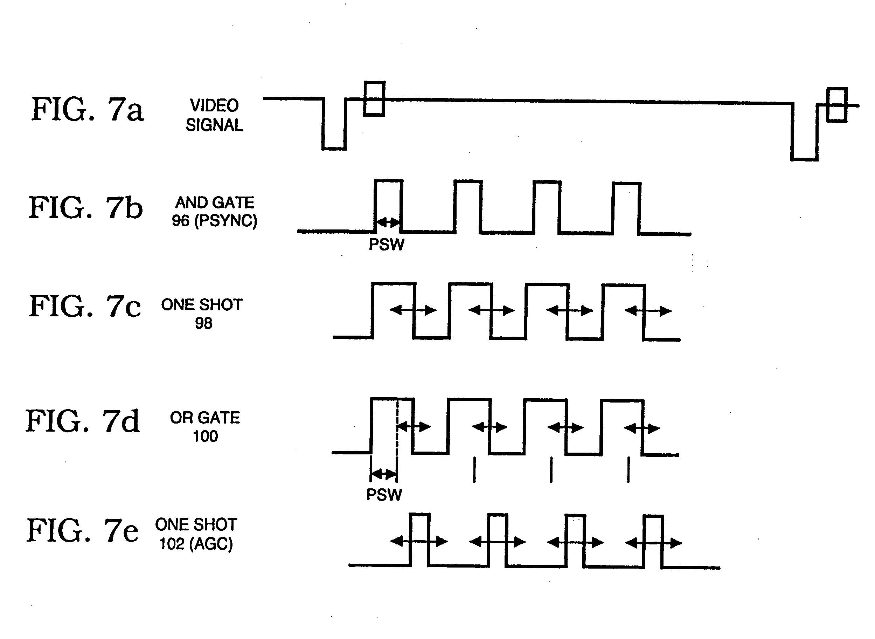

Figure 7 is a block schematic diagram depicting circuitry for generating a copy protection process that mimics the amplitude modulation of AGC pulses by position modulation. Program video with or without copy protection is the input video signal supplied at input (a) to a sync separator 80, which in turn outputs horizontal rate pulses. These horizontal rate pulses are coupled to a horizontal locked (triggered) oscillator 82. The output of this oscillator is preferably but not necessarily locked to the horizontal frequency at a higher frequency (i.e. 4 cycles per half a video line). A one shot (multivibrator) timer circuit 84 defines the positive pulse duration of the horizontal locked oscillator 82. Meanwhile, the sync separator 80 also outputs the horizontal rate pulses to a one shot 86, whose output is coupled to a one shot 88. The latter supplies a gating pulse for the location of pseudo sync pulses in the video line (i.e. 32 *µ*seconds or first half of the video line). The location of the respective video lines that will contain the copy protection pulses is generated by a circuit consisting of a one shot 90, a (525) line counter 92 and an EPROM circuit 94. From the sync separator 80, horizontal pulses are supplied to the one shot 90 whose output is coincident with the beginning of the video line. A frame reset pulse is fed to the 525 line counter 92 (i.e. for NTSC) along with the horizontal rate pulses for the counter's clock. The counter's output is used to address the memory circuit of EPROM 94, which is programmed to output logic high pulses coincident with those video lines that will have the copy protection pulses. The output (b) of an AND gate 96 then comprises "inverted" pseudo sync pulses on selected video lines (i.e., in the vertical blanking interval).

One method for generating position modulated AGC pulses is to induce pulse width modulation on an inverted pseudo sync pulse signal and then trigger off the trailing edge of this pulse width modulated inverted pseudo sync pulse signal to generate AGC pulses. To this end, the output of AND gate 96 triggers a voltage controlled one shot timer 98 on the leading edge of an "inverted" pseudo sync pulse signal. The output (c) of one shot timer 98 is a pulse with a minimum width of the output of AND gate 96, and a maximum pulse width of 1.5 µseconds (or more) than its minimum pulse width. For example, if the output of AND gate 96 has a pulse width of 2.3 µseconds, then the output of one shot timer 98 has pulse widths that vary according to voltage control VC1 from 2.3 *µ*seconds to at least 2.3 *µ*seconds +1.5 *µ*seconds or at least 3.8 *µ*seconds. The output of one shot timer 98 is OR'd by an OR gate 100 with the output of AND gate 96 to ensure that the output (d) of OR gate 100 has a minimum width of the "inverted" pseudo sync pulse from the AND gate. The output of the OR gate 100 triggers on the trailing edge to output AGC pulses whose widths can be controlled voltage wise via a voltage control VC2 supplied to a voltage controlled one shot timer 102. The output of one shot timer 102 then provides AGC pulses that are varying in delay from the pseudo sync pulses' trailing edge on the order of from zero to at least 1.5 *µ*seconds. The output of one shot timer 102 (AGC pulses) is fed to a summing amplifier 104 along with the input video signal. The output of the inverted pseudo sync pulse from AND gate 96 is negatively summed with the output of amplifier 104 via a (negative) summing amplifier 106. The output (e) of amplifier 106 then has position modulated AGC pulses relative to the pseudo sync pulses and is thus a dynamic copy protection signal.

Note Figure 7 illustrates that the AGC pulses also can be pulse width modulated if the one shot timer 84 is voltage controlled. Figures 7a to 7e show the wave forms generated at various locations (a) - (e) in the circuit of Figure 7.

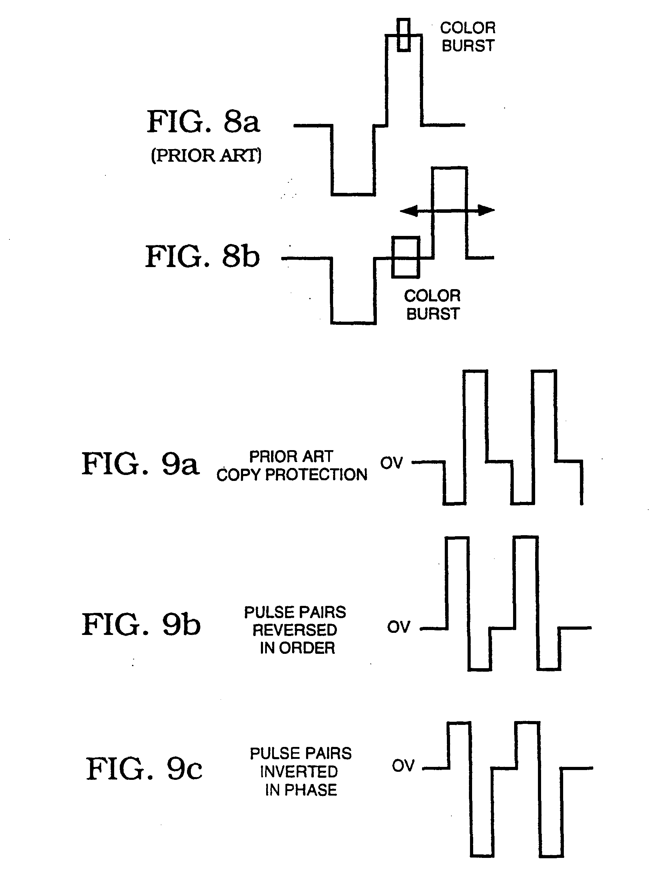

Figures 8a, 8b illustrate that the circuit of Figure 7 can be applied to copy protection pulses with normal sync and raised back porch AGC pulses such as exemplified by Figure 7a. Thus Figure 8b shows a dynamic position modulated copy protection signal that modifies the technique of Figure 3 of Patent 4,819,098. The signal shown in Figure 8b can occur in clusters or in selected video lines.

It should be noted that the copy protection process can have position, pulse width and/or gap width modulation, and/or amplitude modulation, done on individual pseudo sync pulses, horizontal sync pulses, AGC pulses or raised back porch AGC pulses, over time from maximum separation (defeated copy protection) to minimum separation (full copy protection). For instance if there are 40 added pulse pairs of normal pseudo sync pulses and AGC pulses, one can in any combination slowly increase the separation between AGC pulses and pseudo sync pulses in any number of pulse pair(s) at a time or all of them at a time until sufficient pulse pairs of copy protection pulse pairs have maximum separation to turn off copy protection. Additionally, one can in any combination slowly decrease the separation from maximum separation (defeated copy protection) to minimum separation (full copy protection).

As a further example, copy protection signal can be applied throughout the vertical blanking interval and its vicinity, and the copy protection signals can include different amounts of added pulses per video line. In one embodiment for example, a single pseudo sync pulse and/or AGC pulse in a video line can be modulated. As previously mentioned, the AGC or raised back porch AGC pulses also can be amplitude modulated in combination with the above-mentioned processes.

Figure 9a depicts a waveform of a prior art copy protection signal. Figure 9b depicts a waveform of a defeating or modifying method for the signal of Figure 9a which reverses the order of at least portions of the pseudo sync and/or AGC pulses. Figure 9c is a waveform of another method to defeat or modify the original process (Figure 9a for example) by phase shifting, i.e., inverting, at least portions of the pseudo syncs and/or AGC pulses. In the case of Figure 9c the phase shift is a 180 degree reversal of pseudo syncs and AGC pulses. Note that the methods described for Figures 9b and 9c can be applied to those copy protection pulses around or within the horizontal blanking interval. The methods described for Figures 9b and 9c can of course be combined with relative attenuation, pulse narrowing, level shifting, and/or position modulation copy protection defeating processes.

Also it is possible to use the techniques described for Figures 9b and 9c to synthesize a copy protection signal. To dynamically turn on and off the copy protection process for example, the technique starts with a copy protection signal as shown in Figure 9a (copy protection effectively on). The technique continues for example, by slowly reversing the order of the pseudo syncs with the AGC pulses until the (modified) copy protection signal substantially becomes Figure 9b (copy protection effectively off). Similarly, if the technique starts with Figure 9a where the copy protection is fully on, then the copy protection process is slowly turned off by inverting (phase shifting), attenuating, level shifting and/or position modulating the pseudo syncs and/or AGC pulses until the (modified) copy protection signal becomes the signal depicted in Figure 9c.

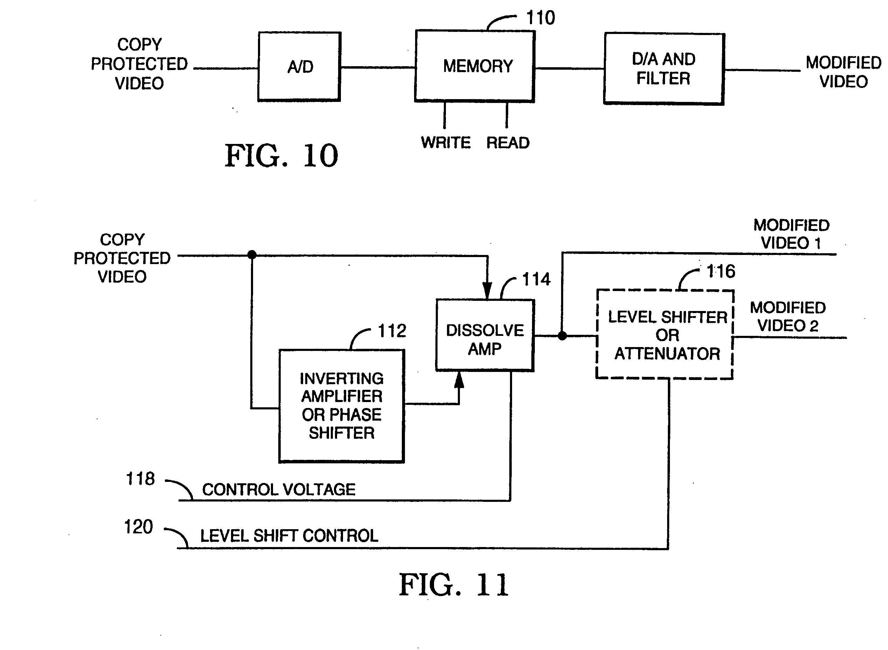

Referring to Figure 10, by using a video memory 110 and/or a regenerating signal, the waveform of Figure 9a can be transformed to that of Figure 9b. In this embodiment, the video memory 110 stores for example, the signal of Figure 9a and the signal is read out of memory in reverse order to achieve the signal of Figure 9b. Thus, the block diagram of Figure 10 is an example of circuitry for implementing the latter signal reversing technique for all or selected portions of the pseudo syncs and/or AGC pulses.

Figure 11 illustrates circuitry for providing the phase shifting technique of previous mention, which transforms the waveform of Figure 9a to that of Figure 9c. To this end, an inverting (or phase shifting) amplifier 112 inverts (phase shifts) the signal of Figure 9a. A video mix dissolve amplifier 114 (or switcher) is used to transform or transition the waveform from that of Figure 9a to that of Figure 9c. The dissolve amplifier 114 is responsive to a control voltage 118. Accordingly, Figure 11 illustrates circuitry for inverting or phase shifting at least portions of the pseudo syncs and/or AGC pulses by way of the inverting or phase shifting amplifier 112 along with the switching or dissolving amplifier 114. An optional level shifting and/or attenuating circuit 116 is also illustrated in Figure 11 in phantom line. The level shifting/attenuating circuit 116 is responsive to a level shift control signal 120.

It will be appreciated that modifications to, and variations in, the embodiments as described and illustrated may be made within the scope of the accompanying claims.

## Claims

1. A method of reducing the effects of copy protection signals in one or more selected video lines of a video signal, wherein the copy protection signals include sync or pseudo sync pulses, together with respective AGC pulses, with the sync or pseudo sync pulses having a given small position separation, which can be zero separation, from the respective AGC pulses, comprising:
providing the sync or pseudo sync pulses with the trailing edge thereof having the small position separation from the leading edge of respective AGC pulses, wherein the small position separation maintains the copy protection effect; and
shifting the position of the sync or pseudo sync pulses and/or shifting the position of the respective AGC pulses with respect to each other to provide position separation between the trailing edge of the sync or pseudo sync pulses and the leading edge of the respective AGC pulses, and thereby produce a gap of sufficient duration to defeat or reduce the effects of the copy protection signals in a video recorder or TV set and allow the recording of a viewable copy.

2. A method as claimed in Claim 1, wherein said gap is produced by position separation only of the trailing edge of the sync or pseudo sync pulses and the leading edge of the respective AGC pulses and not by narrowing any of the pulses.

3. A method as claimed in Claim 1 or Claim 2, comprising:
delaying the leading edge of the AGC pulses relative to the trailing edge of the respective sync or pseudo sync pulses by a time period commensurate with the duration of the gap.

4. A method as claimed in Claim 3, wherein the delay is about 1.0 to 2.5 microseconds depending upon the amount of the small position separation, and provides a gap of about 1.5 or more microseconds.

5. A method as claimed in Claim 1 or Claim 2, comprising:
advancing the trailing edge of the sync or pseudo sync pulses relative to the leading edge of the respective AGC pulses by a time period commensurate with the duration of the gap.

6. A method as claimed in Claim 5, wherein the advancement is about 1.0 to 2.5 microseconds depending upon the amount of the small position separation, and provides a gap of about 1.5 or more microseconds.

7. A method as claimed in Claim 1 or Claim 2, comprising:
delaying the AGC pulses by about 0.5 to about 1.5 microseconds relative to respective sync or pseudo sync pulses whilst advancing the trailing edge of the sync or pseudo sync pulses about 0.5 to about 1.5 microseconds relative to the respective AGC pulses, to obtain said gap.

8. A method as claimed in any preceding claim, further comprising:
narrowing the durations of the sync or pseudo sync pulses and/or the respective AGC pulses.

9. A method as claimed in any preceding claim, wherein the video level of said gap is at a video level in the region of about blanking level.

10. A method as claimed in Claim 1, comprising:
delaying the AGC pulse relative to the respective sync or pseudo sync pulse to provide a gap of a duration almost sufficient to defeat the effects of the copy protection signals; and
additionally narrowing the AGC pulse an amount sufficient to reduce the effects of the copy protection signals.

11. A method as claimed in Claim 1, further comprising:
advancing the sync or pseudo sync pulse's trailing edge to provide a narrowed sync or pseudo sync signal; and
delaying the respective AGC pulse's leading edge to provide a narrowed AGC pulse;
wherein the resulting gap between the sync or pseudo sync pulse and the respective AGC pulse has a sufficient duration to reduce the effects of the copy protection signals.

12. A method as claimed in Claim 1, further comprising:
delaying the position of the AGC pulse; and
advancing the sync or pseudo sync pulse's trailing edge to narrow the sync or pseudo sync pulse;
wherein the resulting gap between the sync or pseudo sync pulses and the respective AGC pulses is of sufficient duration to reduce the effects of the copy protection signals.

13. A method as claimed in Claim 1, comprising:
removing all or sufficient portions of the copy protection signals formed of pseudo sync pulses and respective AGC pulses;
inserting new pseudo sync pulses in advance of the position of the original pseudo sync pulses that are removed; and
inserting new AGC pulses in delayed relation to the position of the original AGC pulses;
whereby a gap is provided which is of sufficient duration to defeat or reduce the effects of the copy protection signals.

14. A method as claimed in Claim 1, comprising:
providing the AGC pulses with the small position separation with respect to respective normal sync pulses; and
position modulating the AGC pulses whilst maintaining a gap between the AGC and normal sync pulses which is of sufficient duration to defeat or reduce the effects of the copy protection signals.

15. A method as claimed in Claim 1, wherein the step of shifting comprises:
reversing the order of the pseudo sync pulses and the respective AGC pulses whilst maintaining said gap.

16. A method as claimed in any preceding claim, wherein the step of shifting comprises:
phase shifting the pseudo sync pulses and the respective AGC pulses 180 degrees.

17. A method as claimed in Claim 1, further providing for restoration of the defeated copy protection signals whereby the recording of a viewable copy is prevented, the method comprising:
shifting the relative positions of the leading edge of the AGC pulses and/or the trailing edge of the respective sync or pseudo sync pulses from the position separation which provides said gap of sufficient duration to defeat or reduce the effects of the copy protection signals back to said small position separation, to restore the copy protection effect;
wherein the shifting is repeated over a selected plurality of video lines.

18. A method as claimed in Claim 17, comprising:
shifting the relative positions of the sync or pseudo sync pulses with respect to the respective AGC pulses to correspondingly increase and decrease the gap by varying the pulse width of the AGC and/or the sync or pseudo sync pulses.

19. A method as claimed in Claim 17, comprising:
varying the position separation by advancing the sync or pseudo sync pulses while varying oppositely the delay of the AGC pulses, and vice versa.

20. Apparatus for reducing the effects of copy protection signals in one or more selected video lines of a video signal, wherein the copy protection signals include sync or pseudo sync pulses, together with respective AGC pulses, with the sync or pseudo sync pulses having a given small position separation, which can be zero separation, from the respective AGC pulses, the apparatus comprising:
input means (a) for supplying the copy protected video signal with the sync or pseudo sync pulses and the respective AGC pulses with the given small position separation which maintains the copy protection effect;
timing circuitry (54, 70, 86-94) for providing timing signals which are coincident with the copy protection signals and indicative of one or more video lines containing sync or pseudo sync pulses together with respective AGC pulses; and
circuit means (50-56, 66-68, 82-84, 98-106, 110, 112-116) responsive to the timing circuitry for shifting positions of the sync or pseudo sync pulses relative to positions of the respective AGC pulses so as to provide position separation between the trailing edges of the sync or pseudo sync pulses and the leading edges of respective AGC pulses and so provide a gap of sufficient duration to reduce or defeat the effects of the copy protection signals in a video recorder or TV set and to allow the recording of a viewable copy of the video signal.

21. Apparatus as claimed in Claim 20, wherein said circuit means (50-56, 66-68, 82-84, 98-106, 110, 112-116) produces said gap only by position separation of the trailing edge of the sync or pseudo sync pulses and the leading edge of the respective AGC pulses and not by narrowing any of the pulses.

22. Apparatus as claimed in Claim 20 or Claim 21, wherein:
the timing circuitry includes sync separating means (52) for providing selected sync signals; and
a timing circuit (54) responsive to the sync separating means (52) for providing the timing signals;
wherein the circuit means includes delay means (50) for delaying the copy protected video signal; and
a clipper circuit (56) responsive to the delay means (50) for supplying delayed AGC pulses; and
wherein the apparatus further comprises switching means (58) for inserting the delayed AGC pulses into the copy protected video signal in response to the timing signals.

23. Apparatus as claimed in Claim 20 or Claim 21, wherein:
the timing circuitry includes sync separating means (64) for providing selected sync signals; and
a timing circuit (70) responsive to the sync separating means (64) for providing the timing signals;
wherein the circuit means includes voltage controlled multivibrator means (66, 68) for providing the gap between the sync or pseudo sync pulses and respective AGC pulses; and
a logic circuit (72) responsive to the multivibrator means (66, 68) and the timing circuit (70) for supplying a control signal indicative of the gap; and
wherein the apparatus further comprises switching means (74) for inserting the pulses having the gap into the copy protected video signal in response to the control signal.

24. Apparatus as claimed in Claim 23, wherein said multivibrator means (66, 68) comprises:
a first one shot (66) coupled to the sync separating means and responsive to a first control voltage (VC 66);
a second one shot (68) coupled to the first one shot (66) and responsive to a second control voltage (VC 68) for providing a signal indicative of the gap; and
a chroma filter (78) receiving the copy protected video signal for reinserting color burst into the unprotected video signal via the switching means (74) in response to the control signal, during the modifying of the pulse widths.

25. Apparatus as claimed in Claim 20 or Claim 21, wherein:
the timing circuitry includes sync separating means (80) for providing selected sync signals; and
a timing circuit (86-94) responsive to the sync separating means (80) for providing the timing signals;
and wherein the circuit means comprises oscillator/one shot means (82, 84) responsive to the sync separating means (80) for providing a signal indicative of the shifted sync or pseudo sync pulses;
logic means (96) responsive to the timing circuit and to the oscillator/one shot means (82, 84) for providing selected sync and/or pseudo sync pulses on selected video lines;
timer circuit means (98-102) receiving the sync and/or pseudo sync pulses and responsive to selected variable voltage control signals for providing AGC pulses that vary in delay from the respective sync or pseudo sync pulses to define said gap; and
summing means (104, 106) receiving the copy protected video signal and the delayed AGC pulses for summing the shifted sync or pseudo sync pulses and respective delayed AGC pulses with the copy protected video signal to defeat or reduce the copy protection effects.

26. Apparatus as claimed in Claim 25, wherein the timing circuit comprises:
a one shot circuit (86, 88) responsive to the sync separating means (80) for providing a line portion timing signal; and
line counter means (90, 92) and a memory circuit (94) responsive to the sync separating means (80) for providing a selected lines timing signal;
wherein the line portion and selected lines timing signals are supplied to the logic means (96).

27. Apparatus as claimed in Claim 25, wherein:
the timer circuit means (98-102) comprises:
a first voltage controlled one shot (98);
an Exclusive OR gate (100) coupled to the first voltage controlled one shot (98) and to the logic means (96); and
a second voltage controlled one shot (102) coupled to the Exclusive OR gate (100) for providing the AGC pulses of varying delay; and
wherein the summing means (104, 106) comprise:
a first summing amplifier (104) for combining the delayed AGC pulses and the copy protected video signal; and
a second summing amplifier (106) coupled to the first summing amplifier (104) for combining the shifted sync or pseudo sync pulses and the respective delayed AGC pulses with the copy protected video signal.

28. Apparatus as claimed in Claim 20 or Claim 21, wherein the copy protection signals include pulse pairs of sync or pseudo sync pulses and respective AGC pulses, and wherein:
the timing circuitry (54, 70, 86-94) includes control means (FIG. 10) for supplying write and read signals; and
the circuit means include memory means (110) receiving the copy protected video signal in response to the write signal, wherein the stored copy protected video signal is recovered from the memory means (110) in reverse order in response to the read signal to provide reversed pulse pairs having said gap between the sync or pseudo sync pulses and respective AGC pulses which defeats or reduces the effect of the copy protection signals.

29. Apparatus as claimed in Claim 28, wherein the copy protected video signal reversing process is implemented for all or a selected plurality of the copy protected signals formed of the sync or pseudo sync pulses and the respective AGC pulse pairs.

30. Apparatus as claimed in Claim 28, wherein:
the timing circuitry (54, 70, 86-94) includes a source (118) of control voltage; and
the circuit means includes inverting amplifier/phase shifter means (112) receiving the copy protected video signal for providing inverted/phase shifted pseudo sync pulses and respective AGC pulses; and
dissolve amplifier means (114) responsive to the control voltage (118) for replacing the original pseudo sync pulses and respective AGC pulses with the inverted/phase shifted pseudo sync pulses and respective AGC pulses.

31. Apparatus as claimed in Claim 30, comprising:
a source (120) of a second control voltage; and
level shifter/attenuator means (116) receiving the output of the dissolve amplifier means (114) and responsive to the second control voltage for level shifting/attenuating the inverted/phase shifted pseudo sync pulses and respective AGC pulses.
